# FASCICULE DE BREVET EUROPEEN

(11) **EP 0 618 415 B1**
(45) Date de publication et mention de la délivrance du brevet: **29.09.1999**
(21) Numéro de dépôt: 94400454.8
(22) Date de dépôt: 03.03.1994
(51) Int. Cl.: F25J 3/04

(54) **Procédé et installation de production d'oxygène gazeux et/ou d'azote gazeux sous pression par distillation d'air**
Verfahren und Vorrichtung zur Herstellung von gasförmigem Sauerstoff und/oder gasförmigem Stickstoff unter Druck durch Zerlegung von Luft
Process and installation for the production of gaseous oxygen and/or gaseous nitrogen under pressure by distillation of air

(30) Priorité: 23.03.1993 FR 9303295
(43) Date de publication de la demande: 05.10.1994
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Darredeau, Bernard, F-78500 Sartrouville (FR); Garnier, Catherine, Houston, Texas 77058 (US); Guillard, Alain, F-75016 Paris (FR); Fraysse, Philippe, F-92260 Fontenay Aux Roses (FR); Lehman, Jean-Yves, F-94700 Maisons Alfort (FR); Rieth, Norbert, F-75014 Paris (FR)
(74) Mandataire: Jacobson, Claude

(56) Documents cités:
- EP-A- 0 316 768
- DE-A- 3 814 187
- FR-A- 2 278 047
- FR-A- 2 681 415
- GB-A- 2 251 931

## Description

La présente invention est relative à un procédé de production d'au moins un produit gazeux constitué d'oxygène gazeux sous une pression de production comprise entre 3 et 100 bars environ et/ou d'azote gazeux sous une pression de production comprise entre 7 et 100 bars environ, et d'un débit variable d'au moins l'un de ces produits sous forme liquide, du type décrit dans le préambule de la revendication 1.

Les pressions dont il est question dans le présent mémoire sont des pressions absolues. De plus, l'expression "liquéfaction" ou "condensation" doit être entendu au sens large, c'est-à-dire incluant la pseudo-liquéfaction ou la pseudo-condensation dans le cas de pressions supercritiques.

Un procédé de type ci-dessus, dit procédé "à pompe", est décrit dans le FR-A-2 674 011.

L'invention a pour but de permettre d'ajuster à volonté, et de façon économique, une production de liquide simultanée à la production de gaz sous pression.

A cet effet, l'invention a pour objet un procédé de type précité, caractérisé par la partie caractérisante de la revendication 1.

Des modes de réalisation préférés de l'invention sont décrits dans les revendications 2 à 5.

L'invention a également pour objet une installation destinée à la mise en oeuvre d'un tel procédé. Cette installation est décrite dans la revendication 6.

Des modes de réalisation préférés de cette installation sont décrits dans les revendications 7 à 11.

Le FR-A-2 681 415 montre un autre exemple de procédé de production d'oxygène sous pression du type "à pompe", avec cycle azote.

Le EP-A-0 316 768 décrit une installation de distillation d'air capable de produire des débits variables d'oxygène liquide et d'oxygène gazeux sous basse pression, par recyclage d'un débit variable d'air moyenne pression.

Le DE-A-38 14 187 décrit un procédé de distillation d'air produisant l'oxygène uniquement sous la basse pression et utilisant un fluide de cycle additionnel à débit variable. Il s'agit d'azote impur soutiré de la colonne basse pression et, après réchauffement, envoyé à l'aspiration du compresseur d'air.

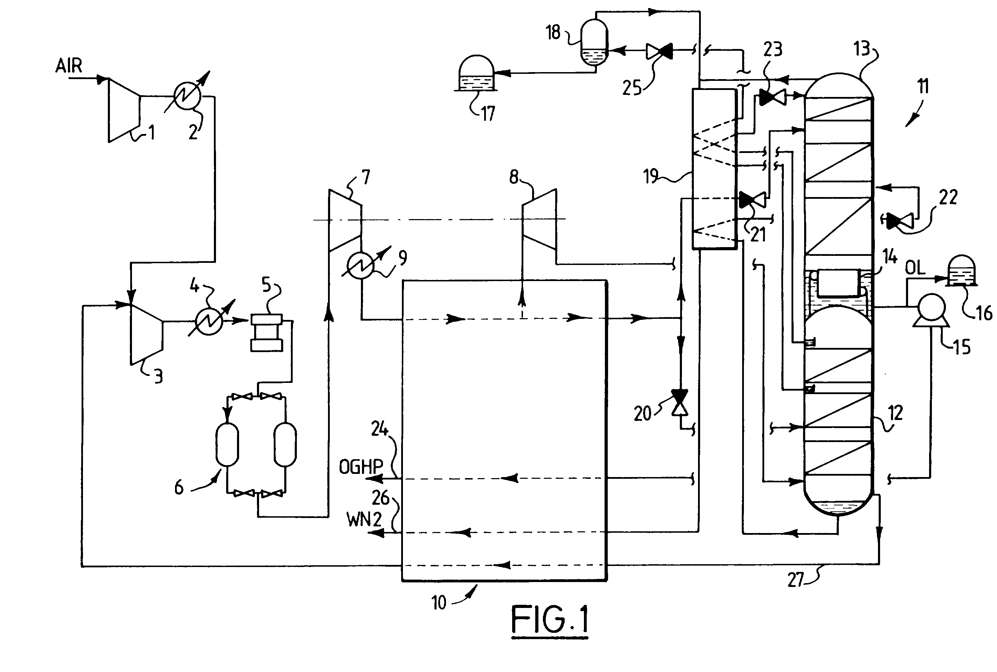

Des exemples de mise en oeuvre de l'invention vont maintenant être décrits en regard des Figures 1 à 3, qui représentent respectivement, de façon schématique, trois modes de réalisation de l'installation conforme à l'invention.

L'installation représentée à la Figure 1 est destinée à produire de l'oxygène gazeux sous une haute pression de 3 à 100 bars environ, de l'oxygène liquide et de l'azote liquide.

Cette installation comprend essentiellement : un pré-compresseur principal d'air 1, ou compresseur moyenne pression, muni à sa sortie d'un réfrigérant atmosphérique ou à eau 2; un second compresseur principal d'air 3, muni à sa sortie d'un réfrigérant atmosphérique ou à eau 4; éventuellement un groupe frigorifique 5; un appareil 6 d'épuration par adsorption; un ensemble soufflante-turbine comprenant une soufflante 7 et une turbine 8 dont les roues sont calées sur le même arbre; un réfrigérant atmosphérique ou à eau 9 pour la soufflante; une ligne d'échange thermique 10; une double colonne de distillation 11 comprenant une colonne moyenne pression 12 et une colonne basse pression 13 couplées par un vaporiseur-condenseur 14 qui met en relation d'échange thermique l'azote de tête de la colonne 12 et l'oxygène liquide de cuve de la colonne 13; une pompe d'oxygène liquide 15; un stockage 16 d'oxygène liquide à la pression atmosphérique; un stockage 17 d'azote liquide à la pression atmosphérique; un pot séparateur 18; et un sous-refroidisseur 19.

En fonctionnement, la colonne 13 est sous une pression légèrement supérieure à 1 bar et la colonne 12 sous la pression correspondante de 5,5 bars environ.

La totalité de l'air à distiller est comprimé en 1 à la moyenne pression, puis comprimé de nouveau en 3, pré-refroidi en 4 et 5 vers + 5 à + 10°C, épuré en eau et en CO2 en 6 et surpressé en 7 à la haute pression. Après pré-refroidissement en 9 puis refroidissement partiel en 10 jusqu'à une température intermédiaire T1, une partie de l'air sous la haute pression poursuit son refroidissement dans la ligne d'échange thermique, est liquéfiée puis divisée en deux fractions. Chaque fraction est détendue dans une vanne de détente respective 20, 21, puis introduite dans la colonne 12, 13 respective.

A la température T1, le reste de l'air sous la haute pression est sorti de la ligne d'échange thermique, turbiné en 8 à la moyenne pression et introduit en cuve de la colonne 12.

De façon habituelle, du "liquide riche" (air enrichi en oxygène) soutiré en cuve de la colonne 12 et du "liquide pauvre" (azote à peu près pur) soutiré en tête de cette colonne sont, après sous-refroidissement en 19 et détente dans des vannes de détente respectives 22 et 23, introduits à un niveau intermédiaire et en tête, respectivement, de la colonne 13.

De l'oxygène liquide est soutiré en cuve de la colonne 13. Une fraction va directement dans le stockage 16, tandis que le reste est amené par la pompe 15 à la haute pression de production désirée, puis vaporisé et réchauffé à la température ambiante dans la ligne d'échange thermique avant d'être récupéré via une conduite 24.

Par ailleurs, de l'azote liquide sous la moyenne pression, soutiré en tête de la colonne 12, est sous-refroidi en 19, détendu à la pression atmosphérique dans une vanne de détente 25, et introduit dans le pot séparateur 18. La phase liquide est envoyée dans le stockage 17, tandis que la phase vapeur est réunie à l'azote impur de tête de la colonne 13, réchauffée en 19 puis en 10 et évacuée de l'installation, en tant que gaz résiduaire, via une conduite 36.

Par ailleurs, de l'air, dans une quantité pouvant aller jusqu'à environ 20% du débit d'air entrant, est soutiré de la cuve de la colonne 12 via une conduite 27, réchauffé à la température ambiante en 10 et renvoyé à l'aspiration du compresseur 3, où il se mélange à l'air moyenne pression issu du compresseur 1.

Ainsi, le compresseur 3, le groupe frigorifique 5, l'appareil d'épuration 6 et la soufflante 7 traitent le débit d'air entrant dans l'installation augmenté du débit d'air recyclé via la conduite 27, et la turbine 8 constitue à la fois la turbine du cycle Claude sur l'air entrant et la turbine de cycle de l'air recyclé. On comprend donc que l'air recyclé sert d'une part à fournir, par sa détente en 8, le froid nécessaire à la production de quantités de liquide importantes, et, par sa liquéfaction en 10, à vaporiser de l'oxygène liquide.

On peut de cette manière, par simple réglage du débit d'air recyclé, faire varier à volonté la production de liquide (oxygène liquide et/ou azote liquide) de l'installation, et ce avec une énergie spécifique sensiblement constante pour le liquide.

A titre d'exemple numérique, la haute pression d'oxygène peut être de 40 bars, avec une pureté de l'ordre de 99,5%, la pression de refoulement du compresseur 3 étant 27 bars et celle du surpresseur 7 étant 35 bars.

De façon générale, la haute pression d'oxygène peut être comprise entre 3 et 100 bars environ, et l'on peut produire de façon analogue de l'azote gazeux sous une haute pression comprise entre 7 et 100 bars environ. De plus, la vaporisation du ou des liquides peut s'effectuer à des températures égales ou largement supérieures à celles correspondant à la condensation de l'air, suivant l'enseignement du FR-A- 2 674 011 précité. De même, il est possible de produire de l'oxygène et/ou de l'azote sous plusieurs pressions, en utilisant plusieurs hautes pressions d'air.

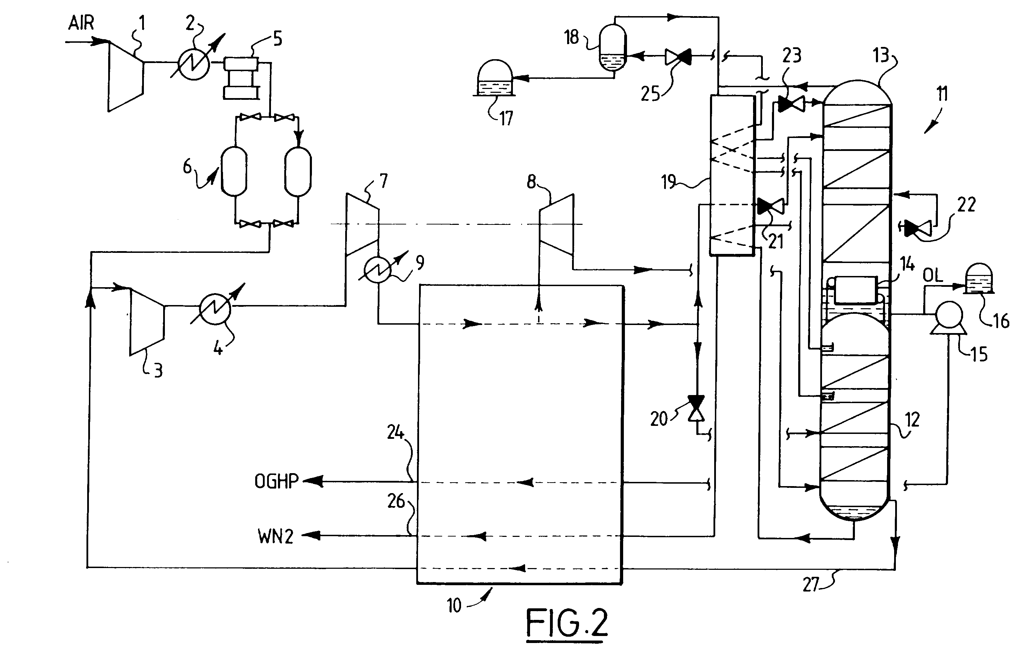

L'installation représentée à la Figure 2 ne diffère de celle de la Figure 1 que par le fait que l'ensemble groupe frigorifique 5-appareil d'épuration 6 est monté entre le réfrigérant 2 et le compresseur 3. Par suite, l'appareil 6 ne traite que le débit d'air entrant, et ce à la moyenne pression, et le compresseur 3 traite de l'air sec et décarbonaté. Les calculs montrent que l'un ou l'autre des agencements des Figures 1 et 2 peut constituer l'optimum économique, suivant les paramètres du procédé.

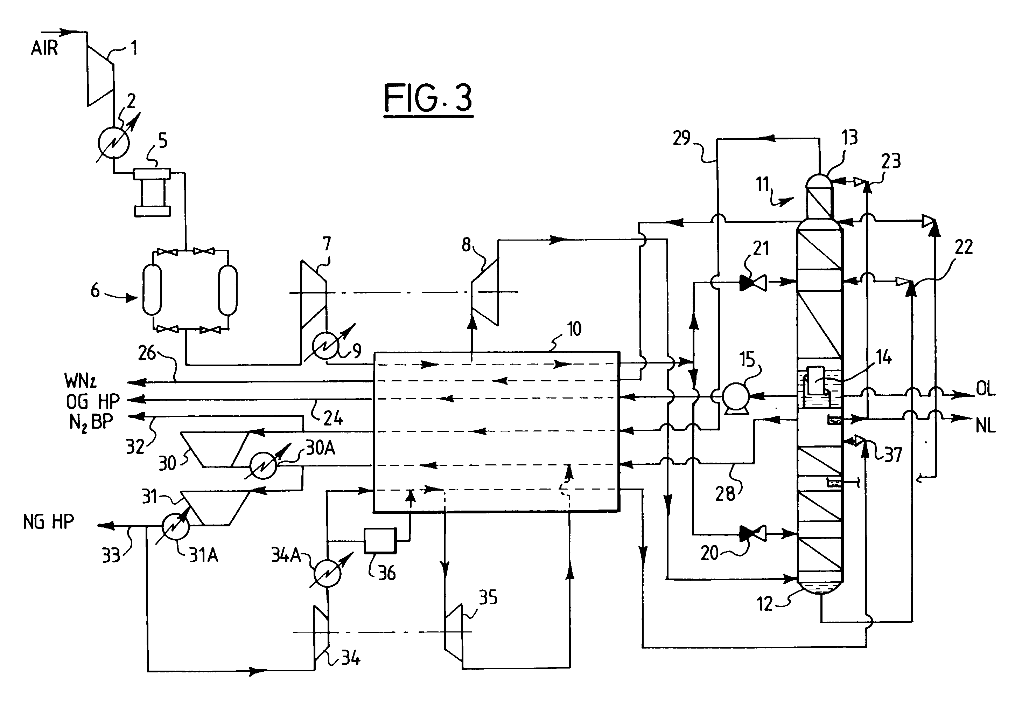

Dans le mode de réalisation de la Figure 3, où les éléments 16 à 19 n'ont pas été représentés, le fluide recyclé est de l'azote, soutiré pour partie en tête de la colonne moyenne pression 12 via une conduite 28 et pour partie, via une conduite 29, en tête de la colonne basse pression 13, qui est du type "à minaret", c'est-à-dire produisant en tête de l'azote pratiquement pur. Par suite, la conduite 27 de la Figure 1 est supprimée, ainsi que le compresseur 3 et son réfrigérant 4, et le compresseur 1 amène à lui seul la totalité de l'air entrant à la pression qui était précédemment la pression de refoulement du compresseur 3.

L'azote basse pression est réchauffé en 10 puis comprimé à la moyenne pression par un premier compresseur de cycle 30 suivi d'un réfrigérant 30A et réuni à l'azote moyenne pression également réchauffé en 10. Les deux flux d'azote moyenne pression sont comprimés à une haute pression de cycle par un second compresseur de cycle 31 suivi d'un réfrigérant 31A. L'azote basse pression réchauffé peut être partiellement récupéré en tant que produit via une conduite 32, et, de même, l'azote haute pression issu du compresseur 31 peut être partiellement récupéré en tant que produit via une conduite 33. Le reste de l'azote issu du compresseur 31 est surpressé par une soufflante 34 suivie d'un réfrigérant 34A et couplée à une turbine de détente 35. L'azote surpressé, dont une fraction est avantageusement prérefroidie par un groupe frigorifique 36, est refroidi en 10 jusqu'à une température intermédiaire T2; à cette température, une fraction est sortie de la ligne d'échange thermique, détendue en 35 à la moyenne pression et réintroduite dans les passages de réchauffement de l'azote de cycle moyenne pression. L'azote haute pression non turbiné poursuit son refroidissement et est liquéfié jusqu'au bout froid de la ligne d'échange thermique, puis est détendu à la moyenne pression dans une vanne de détente 37 et introduit en tête de la colonne 12.

De nouveau, le réglage des débits d'azote utilisés comme fluide de cycle additionnel et de la haute pression de cycle permet de faire varier dans de larges limites la production de liquide de l'installation, et également d'optimiser la dépense d'énergie. De plus, l'intégration du cycle à azote dans la ligne d'échange thermique 10 permet d'obtenir ce résultat moyennant un investissement modéré.

Bien entendu, le cycle à azote intégré peut comporter plusieurs turbines de détente en parallèle, afin d'optimiser les performances énergétiques.

## Revendications

1. Procédé de production d'au moins un produit gazeux constitué d'oxygène gazeux sous une pression de production comprise entre 3 et 100 bars environ et/ou d'azote gazeux sous une pression de production comprise entre 7 et 100 bars environ, et d'un débit variable d'au moins l'un de ces produits sous forme liquide, du type dans lequel:
- on distille de l'air dans une double colonne de distillation (11) comprenant une colonne basse pression (13) fonctionnant sous une pression dite basse pression, et une colonne moyenne pression (12) fonctionnant sous une pression dite moyenne pression;
- on comprime (en 1,3,7) la totalité de l'air à distiller jusqu'à au moins une haute pression d'air nettement supérieure à la moyenne pression;
- on refroidit l'air comprimé jusqu'à une température intermédiaire, et on en détend une partie dans une turbine (8) jusqu'à la moyenne pression, avant de l'introduire dans une colonne moyenne pression (12);
- on liquéfie l'air non turbiné, puis on l'introduit, après détente (en 20,21), dans la double colonne;
- on amène au moins un desdits produits sous forme liquide, soutiré de la double colonne, à ladite pression de production, et on vaporise ce produit liquide par échange de chaleur avec, au moins, une partie de l'air à distiller en cours de refroidissement à une température égale ou largement supérieure à celle correspondant à la condensation de l'air; et
- on évacue de l'installation de l'oxygène et/ou de l'azote sous forme liquide,
caractérisé en ce qu'on réchauffe un débit variable d'un fluide de cycle additionnel soutiré de la double colonne (11) ou destiné à celle-ci, on le comprime (en 3;30,31) à une haute pression de cycle, on le refroidit, on en détend une fraction (en 8;35) avec production de travail extérieur, on réintroduit la fraction détendue dans le fluide de cycle additionnel, on réchauffe cette fraction détendue avec le fluide de cycle additionnel, on liquéfie le reste du fluide de cycle additionnel comprimé, et on envoie ce fluide liquéfié à la double colonne.

2. Procédé suivant la revendication 1, caractérisé en ce que le fluide de cycle additionnel est de l'air sous la moyenne pression qui est mélangé, après son réchauffement, à l'air à distiller pré-comprimé à cette moyenne pression (en 1), le mélange étant ensuite comprimé à ladite haute pression (en 3).

3. Procédé suivant la revendication 2, caractérisé en ce que l'air à distiller précomprimé (en 1) est mélangé à l'air recyclé avant d'être épuré, et le mélange est comprimé à ladite haute pression puis épuré en eau et en anhydride carbonique à cette haute pression (en 6) (Figure 1).

4. Procédé suivant la revendication 2, caractérisé en ce que l'air à distiller précomprimé (en 1) est épuré en eau et en anhydride carbonique (en 6) avant son mélange avec l'air recyclé (Figure 2).

5. Procédé suivant la revendication 1, caractérisé en ce que le fluide de cycle additionnel est de l'azote soutiré en tête de l'une au moins des deux colonnes (12, 13), la fraction détendue de cet azote étant réchauffée tandis que sa fraction liquéfiée est réintroduite dans la double colonne ou récupérée en tant que produit.

6. Installation de production d'oxygène gazeux et/ou d'azote gazeux sous pression et d'un débit variable d'au moins l'un de ces produits sous forme liquide, du type comprenant une double colonne de distillation (11) comprenant une colonne basse pression (13) fonctionnant sous une pression dite basse pression, et une colonne moyenne pression (12) fonctionnant sous une pression dite moyenne pression; des moyens de compression (1,3,7) pour amener la totalité de l'air à distiller à au moins une haute pression nettement supérieure à la moyenne pression; des moyens (15) de soutirage de la double colonne et de pompage d'au moins un produit liquide résultant de la distillation; une ligne d'échange thermique (10) mettant en relation d'échange thermique ledit produit liquide et, au moins, une partie de l'air à distiller en cours de refroidissement; une turbine principale (8) de détente d'une partie de cet air, l'admission de cette turbine étant reliée à un point intermédiaire de la ligne d'échange thermique et son échappement étant relié à la colonne moyenne pression (12); et des moyens pour évacuer de l'installation de l'oxygène et/ou de l'azote sous forme liquide, caractérisée en ce qu'elle comprend un compresseur de cycle (3,7; 30,31,34) et en ce que la ligne d'échange thermique (10) comprend des passages de réchauffement d'un débit variable d'un fluide de cycle additionnel soutiré de la double colonne (11) ou destiné à celle-ci, reliés à l'aspiration du compresseur de cycle, des passages de refroidissement du fluide de cycle additionnel comprimé, reliés au refoulement du compresseur de cycle, et une turbine de cycle (8;35) pour détendre une fraction du fluide de cycle additionnel, dont l'admission est reliée à un point intermédiaire de ces passages de refroidissement et dont l'échappement est relié de manière à réintroduire la fraction détendue du fluide de cycle dans les passages de réchauffement du fluide de cycle, la sortie desdits passages de refroidissement étant reliés à la double colonne.

7. Installation suivant la revendication 6, caractérisée en ce que l'entrée des passages de réchauffement est reliée à la cuve de la colonne moyenne pression (12), et leur sortie est reliée à l'aspiration d'un second compresseur d'air (3) constituant ledit compresseur de cycle, cette aspiration étant également reliée au refoulement d'un pré-compresseur d'air (1), ladite turbine principale (8) constituant également la turbine de cycle.

8. Installation suivant la revendication 7, caractérisée en ce qu'un appareil (6) d'épuration d'air par adsorption est monté au refoulement du second compresseur d'air (3).

9. Installation suivant la revendication 7, caractérisée en ce qu'un appareil (6) d'épuration d'air par adsorption est monté entre le pré-compresseur d'air (1) et le second compresseur d'air (3).

10. Installation suivant la revendication 6, caractérisée en ce que l'entrée des passages de réchauffement est reliée à la tête de la colonne moyenne pression (12) et/ou à celle de la colonne basse pression (13), la sortie des passages de refroidissement étant reliée à la double colonne via une vanne de détente (37).

11. Installation suivant la revendication 10, caractérisé en ce qu'un groupe frigorifique (36) de pré-refroidissement d'une partie de l'azote de cycle est monté au refoulement du compresseur de cycle final (34).

## Patentansprüche

1. Verfahren zur Herstellung von mindestens einem gasförmigen Produkt, das aus gasförmigem Sauerstoff unter einem Herstellungsdruck von etwa 3 bis 100 bar und/oder gasförmigem Stickstoff unter einem Herstellungsdruck von etwa 7 bis 100 bar besteht, mit einem veränderlichen Durchsatz mindestens eines dieser Produkte in flüssiger Form, bei welchem
- man Luft in einer doppelten Fraktioniersäule (11) fraktioniert, die eine unter einem sogenannten Niederdruck arbeitende Niederdrucksäule (13) und eine unter einem sogenannten Mitteldruck arbeitende Mitteldrucksäule (12) umfaßt;
- man die gesamte zu fraktionierende Luft bis zu mindestens einem Lufthochdruck verdichtet (bei 1, 3, 7), der deutlich über dem Mitteldruck liegt;
- man die Luft auf eine Zwischentemperatur kühlt und einen Teil von ihr in einer Turbine (8) auf den Mitteldruck entspannt, bevor sie in eine Mitteldrucksäule (12) eingeführt wird;
- man die nicht in der Turbine behandelte Luft verflüssigt und sie dann nach Entspannung (in 20, 21) in die doppelte Säule einführt;
- man mindestens eines der Produkte in flüssiger Form nach Abzug von der doppelten Säule auf den Herstellungsdruck bringt und dieses flüssige Produkt durch Wärmeaustausch mit mindestens einem Teil der in Kühlung begriffenen zu fraktionierenden Luft bei einer Temperatur verdampft, die gleich der der Kondensierung der Luft entsprechenden Temperatur oder viel höher als diese ist; und
- man aus der Anlage Sauerstoff und/oder Stickstoff in flüssiger Form abführt,
dadurch gekennzeichnet, daß man einen veränderlichen Durchsatz eines von der doppelten Säule (11) abgezogenen oder für diese bestimmten Zusatzkreislauffluids erhitzt, es auf einen Kreislaufhochdruck verdichtet ( bei 3; 30, 31), es kühlt, eine Fraktion davon unter Erzeugung von äußerer Arbeit entspannt (bei 8; 35), die entspannte Fraktion in das Zusatzkreislauffluid zurückleitet, man diese entspannte Fraktion mit dem Zusatzkreislauffluid erhitzt, man den Rest des verdichteten Zusatzkreislauffluids verflüssigt und dieses verflüssigte Fluid in die doppelte Säule einleitet.

2. Verfahren nach Anspruch 1, dadurch gekennzeichnet, daß das Zusatzkreislauffluid Luft unter Mitteldruck ist, die nach ihrer Erhitzung mit der auf diesen Mitteldruck vorverdichteten (bei 1) zu fraktionierenden Luft gemischt wird, wobei die Mischung anschließend auf den Hochdruck verdichtet wird (bei 3).

3. Verfahren nach Anspruch 2, dadurch gekennzeichnet, daß die vorverdichtete (bei 1) zu fraktionierende Luft vor Reinigung mit der rezyklierten Luft gemischt wird und die Mischung auf den Hochdruck verdichtet wird und dann bei diesem Hochdruck von Wasser und von Kohlendioxid gereinigt wird (bei 6) (Fig.1).

4. Verfahren nach Anspruch 2, dadurch gekennzeichnet, daß die vorverdichtete (bei 1) zu fraktionierende Luft vor ihrer Mischung mit der rezyklierten Luft von Wasser und Kohlendioxid gereinigt wird (bei 6) (Fig. 2).

5. Verfahren nach Anspruch 1, dadurch gekennzeichnet, daß das Zusatzkreislauffluid Stickstoff ist, der am Kopf mindestens einer der beiden Säulen (12, 13) abgezogen wurde, wobei die entspannte Fraktion dieses Stickstoffs erhitzt wird, während seine verflüssigte Fraktion wieder in die doppelte Säule eingeführt oder als Produkt gewonnen wird.

6. Anlage zur Herstellung von gasförmigem Sauerstoff und/oder gasförmigem Stickstoff unter Druck und mit einem veränderlichen Durchsatz mindestens eines dieser Produkte in flüssiger Form, umfassend eine doppelte Fraktioniersäule (11), die aus einer unter einem sogenannten Niederdruck arbeitenden Niederdrucksäule (13) und einer unter einem sogenannten Mitteldruck arbeitenden Mitteldrucksäule (12) besteht; Verdichtungsmittel (1, 3, 7), um die gesamte zu fraktionierende Luft auf mindestens einen Hochdruck zu bringen, der deutlich höher als der Mitteldruck ist; Mittel (15) zum Abziehen mindestens eines sich aus der Fraktionierung ergebenden flüssigen Produkts von der doppelten Säule und zum Pumpen dieses Produkts; eine Wärmeaustauschstrecke (10), die dieses flüssige Produkt und mindestens einen Teil der in Abkühlung begriffenen zu fraktionierenden Luft in Wärmeaustauschbeziehung zueinander bringt; eine Hauptturbine (8) zur Entspannung eines Teils dieser Luft, wobei der Einlaß dieser Turbine mit einem Zwischenpunkt der Wärmeaustauschstrecke und ihr Austritt mit der Mitteldrucksäule (12) verbunden ist; und Mittel zum Abführen von Sauerstoff und/oder Stickstoff in flüssiger Form von der Anlage, dadurch gekennzeichnet, daß sie einen Kreislaufverdichter (3, 7; 30, 31, 34) umfaßt und daß die Wärmeaustauschstrecke (10) mit der Saugseite des Kreislaufverdichters verbundene Durchgänge zum Erhitzen eines veränderlichen Durchsatzes eines von der doppelten Säule (11) abgezogenen oder für diese bestimmten Zusatzkreislauffluids, Durchgänge zum Kühlen des verdichteten Zusatzkreislauffluids, die mit der Druckseite des Kreislaufverdichters verbunden sind, und eine Kreislaufturbine (8; 35) zum Entspannen einer Fraktion des Zusatzkreislauffluids aufweist, deren Einlaß mit einem Zwischenpunkt der Kühldurchgänge verbunden ist und deren Austritt so verbunden ist, daß die entspannte Fraktion des Kreislauffluids wieder in die Durchgänge zur Erhitzung des Kreislauffluids eingeführt wird, wobei der Austritt der Kühldurchgänge mit der doppelten Säule verbunden sind.

7. Anlage nach Anspruch 6, dadurch gekennzeichnet, daß der Eintritt der Erhitzungsdurchgänge mit dem Boden der Mitteldrucksäule (12) und ihr Austritt mit der Saugseite eines zweiten Luftverdichters (3) verbunden ist, der den Kreislaufverdichter bildet, wobei diese Saugseite ferner mit der Druckseite eines Luftvorverdichters (1) verbunden ist und die Hauptturbine (8) auch die Kreislaufturbine bildet.

8. Anlage nach Anspruch 7, dadurch gekennzeichnet, daß eine Vorrichtung (6) zur Reinigung der Luft durch Adsorption auf der Druckseite des zweiten Luftverdichters (3) angeordnet ist.

9. Anlage nach Anspruch 7, dadurch gekennzeichnet, daß eine Vorrichtung (6) zur Reinigung der Luft durch Adsorption zwischen dem Luftvorverdichter (1) und dem zweiten Luftverdichter (3) angeordnet ist.

10. Anlage nach Anspruch 6, dadurch gekennzeichnet, daß der Eintritt der Erhitzungsdurchgänge mit dem Kopf der Mitteldrucksäule (12) und/oder mit dem der Niederdrucksäule (13) verbunden ist, wobei der Austritt der Kühldurchgänge über ein Entspannungsventil (37) mit der doppelten Säule verbunden ist.

11. Anlage nach Anspruch 10, dadurch gekennzeichnet, daß ein Kühlaggregat (36) zum Vorkühlen eines Teils des Kreislaufstickstoffs auf der Druckseite des Endkreislaufverdichters (34) angeordnet ist.

## Claims

1. Method for producing at least one gaseous product comprising gaseous oxygen at production pressure between approx. 3 and 100 bar and/or gaseous nitrogen at production pressure between approx. 7 and 100 bar and a variable yield of at least one of these products in liquid form of the type in which:
air is distilled in a double distillation column (11) comprising a low pressure column (13) which functions at a pressure termed low pressure and a medium pressure column (12) which functions at a pressure termed medium pressure;
the total quantity of air to be distilled is compressed (in 1, 3, 7) to at least a high air pressure which is clearly greater than the medium pressure;
the compressed air is cooled to an intermediate temperature and a part of it is expanded in a turbine (8) to medium pressure before it is introduced into a medium pressure column (12);
the air which has not been in the turbine is liquified, then introduced into the double column after being expanded (in 20, 21);
at least one of said products in a liquid form is brought, having been drawn off from the double column, to said production pressure, and this liquid product is vapourised by heat exchange with at least a part of the air to be distilled during cooling to a temperature which is equal to or broadly higher than that corresponding to the condensation of the air; and
oxygen and/or nitrogen is drawn off from the installation in liquid form,
characterised in that a variable yield of an additional cycle fluid which is drawn off from the double column (11) or intended for the latter is heated, said output is compressed (in 3; 30, 31) to a high pressure cycle, cooled, a fraction thereof is expanded (in 8; 35) with production of outside work, the expanded fraction is reintroduced into the additional cycle fluid, this expanded fraction is heated with the additional cycle fluid, the remainder of the compressed additional cycle fluid is liquified, and this liquified fluid is supplied to the double column.

2. Method according to claim 1, characterised in that the additional cycle fluid is air at the medium pressure which, after its heating, is mixed with the air to be distilled which has been pre-compressed to this medium pressure (in 1), the mixture thereafter being compressed to the said high pressure (in 3).

3. Method according to claim 2, characterised in that the pre-compressed air to be distilled (in 1) is mixed with the recyoled air before being purified, and the mixture is compressed to said high pressure then purified in water and in carbon dioxide at this high pressure (in 6) (Figure 1).

4. Method according to claim 2, characterised in that the pre-compressed air to be distilled (in 1) is purified in water and carbon dioxide (in 6) before being mixed with the recycled air (Figure 2).

5. Method according to claim 1, characterised in that the additional cycle fluid is nitrogen which is drawn off from the top of at least one of the two columns (12, 13), the expanded fraction of this nitrogen being heated while its liquified fraction is reintroduced into the double column or recovered as product.

6. Installation for producing gaseous oxygen and/or gaseous nitrogen under pressure and a variable yield of at least one of these products in a liquid form of the type comprising a double distillation column (11) comprising a low pressure column (13) which functions at a pressure termed low pressure, and a medium pressure column (12) which functions at a pressure termed medium pressure; compression means (1, 3, 7) for bringing the total quantity of air to be distilled to at least a high pressure which is clearly higher than the madium pressure; means (15) for drawing off from the double column and for pumping at least one liquid product resulting from the distillation; a thermal exchange line (10) which places said liquid product and at least a part of the air to be distilled in a thermal exchange relation during cooling; a main turbine (8) for expanding a part of this air, the inlet of this turbine being connected at an intermediate point in the thermal exchange line and its exhaust being connected to the medium pressure column (12); and means for drawing off oxygen and/or nitrogen from the installation in a liquid form, characterised in that said installation comprises a cycle compressor (3, 7; 30, 31, 34), and in that the thermal exchange line (10) comprises passages for heating a variable yield of additional cycle fluid which is drawn off from the double column (11) or intended for the latter, these passages being connected to the suction of the cycle compressor, and passages for cooling the compressed additional cycle fluid, these passages being connected to the discharge side of the cycle compressor, and a cycle turbine (8; 35) for expanding a fraction of the additional cycle fluid, the inlet of which is connected to an intermediate point of these cooling passages and the exhaust of which is connected such as to reintroduce the expanded fraction of the cycle fluid into the passages for heating the cycle fluid, the outlet from said cooling passages being connected to the double column.

7. Installation according to claim 6, characterised in that the entrance to the heating passages is connected to the vessel of the medium pressure column (12) and their outlet is connected to the suction of a second air compressor (3) constituting said cycle compressor, this suction being likewise connected to the discharge of an air pre-compressor (1), said main turbine (8) constituting likewise the cycle turbine.

8. Installation according to claim 7, characterised in that a device (6) for air purification by adsorption is mounted on the discharge of the second air compressor (3).

9. Installation according to claim 7, characterised in that a device (6) for air purification by adsorption is mounted between the air pre-compressor (1) and the second air compressor (3).

10. Installation according to claim 6, characterised in that the entrance of the heating passages is connected to the top of the medium pressure column (12) and/or to that of the low pressure column (13), the outlet from the cooling passages being connected to the double column via a pressure-reducing valve (37).

11. Installation according to claim 10, characterised in that a refrigerating plant (36) for pre-cooling of a part of the nitrogen from the cycle is mounted at the discharge of the final cycle compressor (34).
